# EUROPEAN PATENT APPLICATION

(11) **EP 4 496 096 A1**
(43) Date of publication of application: **22.01.2025**
(21) Application number: 23770188.3
(22) Date of filing: 10.02.2023
(51) Int. Cl.: H01M 50/291, H01M 10/613, H01M 10/6235, H01M 10/625, H01M 10/627, H01M 10/643, H01M 10/658, H01M 50/213, H01M 50/289

(54) **BATTERY PACK AND MANUFACTURING METHOD THEREFOR**

(30) Priority: 18.03.2022 JP 2022044333
(71) Applicant: Panasonic Energy Co., Ltd., Osaka 570-8511 (JP)
(72) Inventor: ARIKAWA, Hiroshi, Kadoma-shi, Osaka 571-0057 (JP); FUKUDA, Shinsuke, Kadoma-shi, Osaka 571-0057 (JP)
(74) Representative: Novagraaf International SA
(86) International application number: PCT/JP2023/004567
(87) International publication number: WO 2023/176227

(57) **Abstract**

A battery pack includes: a plurality of secondary battery cells each having a cylindrical shape, the plurality of secondary battery cells being arranged adjacent to each other to be parallel to each other; an intermediate body arranged between adjacent secondary battery cells among the plurality of secondary battery cells; and a pair of side surface bodies each of which includes an inner surface formed in a curved shape according to an outer shape of the secondary battery cell and sandwiches a corresponding one of the plurality of secondary battery cells between a part of the inner surface and a part of a surface of the intermediate body. The part of the surface of the intermediate body includes a curved region curved in a shape along a side surface of the corresponding one of the plurality of secondary battery cells.

## Description

### TECHNICAL FIELD

The present disclosure relates to a battery pack and a manufacturing method therefor.

### BACKGROUND ART

A battery pack in which a large number of secondary battery cells are connected in series and in parallel is used as a power source for an assist bicycle or a power source for a portable electric device such as an electric cleaner or an electric power tool, or as a backup power source for a server or a power source device for home use, business use, or factory use in stationary storage applications, and is also used as a power source for driving an electric scooter, an electric cart, or a vehicle such as a hybrid vehicle or an electric vehicle. In such a battery pack, a large number of cylindrical secondary battery cells are stored in a cell holder, aligned, and connected with a lead wire or a lead plate interposed therebetween (for example, PTL 1). Such a cell holder is integrally molded in a shape surrounding the entire periphery of the cylindrical side surface of the secondary battery cell. A large number of secondary battery cells are inserted into the cell holder to position the secondary battery cells.

However, although the secondary battery cell inserted into such a cell holder can be positioned, the rotation in the cell holder cannot be suppressed. When vibration is applied to the battery pack, the cylindrical secondary battery cells may start to rotate in the cell holder, and when a load due to rotation is applied to a spot welded part to which a lead plate or the like connecting the secondary battery cells in series or in parallel is fixed, there is a possibility that a defect such as detachment of the spot welded part or breakage of the lead plate occurs. On the other hand, a measure is adopted in which the secondary battery cells and the cell holder are fixed with an adhesive or the like to suppress the rotation, but this method has a problem that a large number of secondary battery cells need to be adhered, which takes time and effort. Citation List

### Patent Literature

PTL 1: Unexamined Japanese Patent Publication No. 2012-033464

### SUMMARY OF THE INVENTION

An object of the present disclosure is to provide a battery pack with improved reliability by suppressing rotation of a cylindrical secondary battery cell.

In order to achieve the above object, a battery pack according to an embodiment of the present invention is a battery pack including: a plurality of secondary battery cells each having a cylindrical shape, the plurality of secondary battery cells being arranged adjacent to each other to be parallel to each other; an intermediate body arranged between adjacent secondary battery cells among the plurality of secondary battery cells; and a pair of side surface bodies each of which sandwiches a corresponding one of the secondary battery cell with one of right and left side surfaces of the intermediate body and has an inner surface formed in a curved shape according to an outer shape of the secondary battery cell, in which the side surface of the intermediate body has a curved region in which the intermediate body is curved in a shape along the side surface of the secondary battery cell, and fixing structures for fixing to the side surface body are provided on both sides of the curved region.

According to the battery pack according to the embodiment of the present invention, the secondary battery cell is sandwiched by being fixed between the intermediate body and the side surface body, and even a cylindrical secondary battery cell can be held so as not to rotate.

### BRIEF DESCRIPTION OF THE DRAWINGS

Fig. 1 is an external perspective view illustrating a battery pack according to a first exemplary embodiment.
Fig. 2 is an exploded perspective view of the battery pack of Fig. 1.
Fig. 3 is a cross-sectional view taken along line III-III of the battery pack of Fig. 1.
Fig. 4 is a cross-sectional view illustrating an assembly process of the battery pack of Fig. 1.
Fig. 5 is a cross-sectional view illustrating an assembly process of the battery pack of Fig. 1.
Fig. 6 is a cross-sectional view illustrating an assembly process of the battery pack of Fig. 1.
Fig. 7 is a cross-sectional view illustrating another assembly process of the battery pack of Fig. 1.
Fig. 8 is a cross-sectional view illustrating a battery pack according to a second exemplary embodiment.
Fig. 9 is a cross-sectional view illustrating a battery pack according to a third exemplary embodiment.
Fig. 10 is a cross-sectional view illustrating a battery pack according to a fourth exemplary embodiment.
Fig. 11 is a cross-sectional view illustrating a battery pack according to a fifth exemplary embodiment.
Fig. 12 is a cross-sectional view illustrating a battery pack according to a sixth exemplary embodiment.
Fig. 13 is a cross-sectional view illustrating an intermediate body of a battery pack according to a seventh exemplary embodiment.
Fig. 14 is a perspective view illustrating an intermediate body of Fig. 13.
Fig. 15 is a perspective view illustrating a battery pack according to a modification.
Fig. 16 is a cross-sectional view illustrating a battery pack according to an eighth exemplary embodiment.
Fig. 17 is a cross-sectional view illustrating a battery pack according to a ninth exemplary embodiment.
Fig. 18 is a cross-sectional view illustrating a battery pack according to another modification.
Fig. 19 is a cross-sectional view illustrating a battery pack according to another modification.
Fig. 20 is a cross-sectional view illustrating a battery pack according to another modification.
Fig. 21 is a cross-sectional view illustrating a battery pack according to another modification.
Fig. 22 is a cross-sectional view illustrating a battery pack according to a tenth exemplary embodiment.
Fig. 23 is a side view of the battery pack illustrated in Fig. 22.
Fig. 24 is a cross-sectional view illustrating a battery pack according to an eleventh exemplary embodiment.
Fig. 25 is a cross-sectional view illustrating a battery pack according to another modification.
Fig. 26 is an exploded perspective view illustrating a battery pack according to a twelfth exemplary embodiment.
Fig. 27 is an exploded perspective view illustrating a battery pack according to a comparative example.
Fig. 28 is a side view of a battery pack according to a comparative example.

### DESCRIPTION OF EMBODIMENTS

Exemplary embodiments of the present invention may be specified by the following configurations and features.

In the battery pack according to another exemplary embodiment of the present invention, in the above exemplary embodiment, each of the pair of side surface bodies form a cell storage space that sandwiches the corresponding one of the plurality of secondary battery cells between the inner surface and a side surface of the intermediate body.

The curved region is formed in a middle of the side surface of the intermediate body.

A fixing structure for fixing to the side surface body is provided on each of both sides of the curved region.

In the battery pack according to another exemplary embodiment of the present invention, in any one of the above exemplary embodiments, the fixing structure includes a locking part formed in the intermediate body, the locking part being for engaging with a part of the side surface body. Further, the fixing structure includes a protruding part formed in the side surface body at a position corresponding to the locking part on a surface side facing the intermediate body, the protruding part protruding so as to be locked to the locking part.

Further, in the battery pack according to another exemplary embodiment of the present invention, in any one of the above exemplary embodiments, the fixing structure includes a protruding part formed in the intermediate body, the protruding part protruding so as to engage with a part of the side surface body. Further, the fixing structure includes a locking part formed in the side surface body at a position corresponding to the protruding part on a surface side facing the intermediate body, the locking part being to be locked to the protruding part.

Furthermore, in the battery pack according to another exemplary embodiment of the present invention, in any one of the above exemplary embodiments, a plurality of the intermediate bodies are provided.

Each of the plurality of secondary battery cells is alternately arranged with one of the plurality of intermediate bodies.

Secondary battery cells located at the ends among the plurality of secondary battery cells are each sandwiched between an inner surface of a corresponding one of the pair of side surface bodies and one side surface of the plurality of intermediate bodies, and a secondary battery cell located in a middle among the plurality of secondary battery cells is sandwiched between side surfaces of the plurality of intermediate bodies.

Furthermore, in a battery pack according to still another exemplary embodiment of the present invention, in any one of the above exemplary embodiments, the plurality of secondary battery cells are laminated and arranged in multiple stages between inner surfaces of the pair of side surface bodies and left and right side surfaces of the intermediate body.

Further, in the battery pack according to another exemplary embodiment of the present invention, in any one of the above exemplary embodiments, the side surface bodies are not in contact with each other. With the above configuration, even in a case where an unspecified secondary battery cell is ignited and generates heat, it is possible to avoid a situation such as a chain fire in which heat is propagated from the secondary battery cell that generates heat to an adjacent unheated cell through the side surface body, and the adjacent cell is also ignited and generates heat.

Furthermore, in a battery pack according to another exemplary embodiment of the present invention, in any one of the above exemplary embodiments, the pair of side surface bodies form a cell storage space that sandwiches the plurality of secondary battery cells between facing surfaces that cause the side surface bodies to face each other.

A plurality of curved surfaces according to an outer shape of the secondary battery cells are formed on each of the facing surfaces.

The intermediate body is arranged to overlap with the plurality of curved surfaces formed on one of the facing surfaces of the pair of side surface bodies, and presses the plurality of secondary battery cells in the cell storage space.

A battery pack according to still another exemplary embodiment of the present invention further includes, in any one of the above exemplary embodiments, a heat insulating plate interposed between adjacent secondary battery cells among the plurality of secondary battery cells.

Further, in the battery pack according to another exemplary embodiment of the present invention, in any one of the above exemplary embodiments, the intermediate body includes at least the curved region made of a member having elasticity. With the above configuration, the curved region of the intermediate body can be elastically deformed to firmly hold the secondary battery cells.

Furthermore, in the battery pack according to another exemplary embodiment of the present invention, in any one of the above exemplary embodiments, a cylindrical storage space formed by the curved region of the intermediate body and a curved region of the side surface body is formed to be equal to or smaller than an outer shape of the secondary battery cell. With the above configuration, when the secondary battery cells are stored in the cylindrical storage space, the curved region of the intermediate body can be elastically deformed to firmly hold the secondary battery cells.

Furthermore, in a battery pack according to another exemplary embodiment of the present invention, in any one of the above exemplary embodiments, the intermediate body has a recess formed in a region where the curved regions formed on both sides of the intermediate body approach. According to the above configuration, even in a case where an unspecified secondary battery cell is ignited and heated, the heat insulating space is formed by the convex part, so that it is possible to achieve a configuration in which heat hardly propagates to an adjacent unheated cell.

Furthermore, in a battery pack according to another exemplary embodiment of the present invention, in any one of the above exemplary embodiments, the intermediate body has irregularities on a surface of the curved region. With the above configuration, it is possible to effectively prevent the rotation of the secondary battery cells.

Hereinafter, exemplary embodiments of the present invention will be described with reference to the drawings. However, the exemplary embodiments described below are examples for embodying the technical idea of the present invention, and the present invention is not limited to the exemplary embodiments described below. Moreover, in the present specification, members indicated in the claims are never specified to the members of the exemplary embodiments. **In** particular, the dimensions, materials, shapes, relative arrangements, and the like of the components described in the exemplary embodiments are not intended to limit the scope of the present invention exclusively unless otherwise specified, and are merely illustrative examples. Note that the sizes, positional relationships, or the like of members illustrated in the drawings may be exaggerated for clarity of description. **In** the following description, the same names and reference numerals indicate the same or similar members, and detailed description will be appropriately omitted. Furthermore, the elements constituting the present invention may be configured such that a plurality of elements are constituted of the same member to form one member that functions as the plurality of elements, or conversely, a function of one member can be shared and achieved by a plurality of members.

The battery pack of the present invention can be used as a power source for a portable electric device such as an electric cleaner or an electric power tool, or as a backup power source for a server or a power source device for home use, business use, or factory use in stationary storage applications, and is also used as a power source for driving an assist bicycle, an electric scooter, an electric cart, or a power source for driving a vehicle such as a hybrid vehicle or an electric vehicle. Hereinafter, a battery pack for an assist bicycle will be described as an exemplary embodiment of the present invention.

### [First exemplary embodiment]

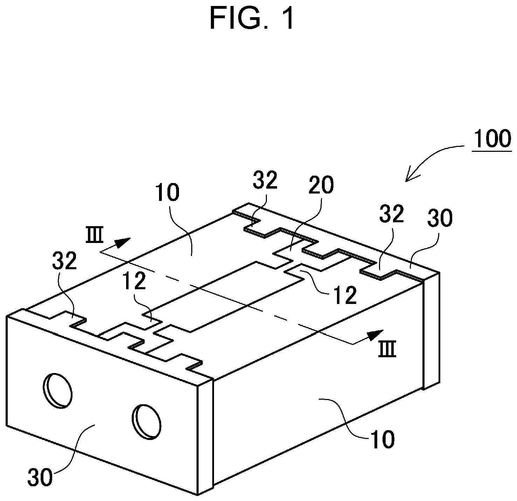

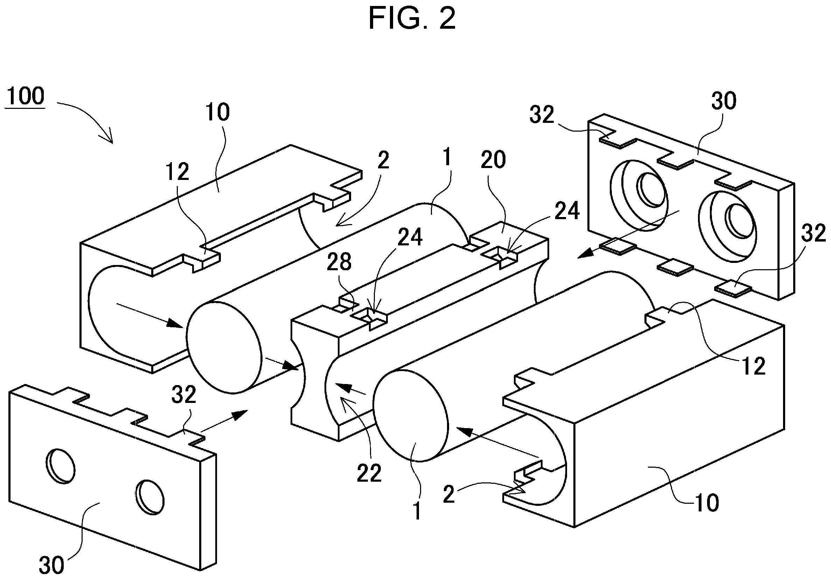

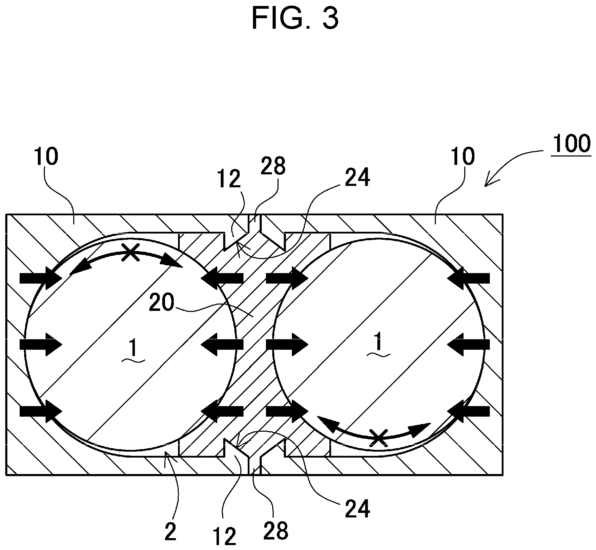

Battery pack 100 according to a first exemplary embodiment of the present invention is illustrated in Figs. 1 to 3. In these drawings, Fig. 1 is an external perspective view illustrating battery pack 100 according to the first exemplary embodiment, Fig. 2 is an exploded perspective view of battery pack 100 of Fig. 1, and Fig. 3 is a cross-sectional view taken along line III-III of battery pack 100 of Fig. 1. Battery pack 100 illustrated in these drawings has a box-like outer shape as illustrated in Fig. 1. As illustrated in Fig. 2, battery pack 100 includes a plurality of secondary battery cells 1, a pair of side surface bodies 10, intermediate body 20, and a pair of end surface plates 30.

### (Secondary battery cell 1)

The plurality of secondary battery cells 1 are arranged adjacent to each other with intermediate body 20 interposed therebetween. Each secondary battery cell 1 is a cylindrical secondary battery cell whose exterior can has a cylindrical shape. The cylindrical secondary battery cell has terminal surfaces on both end surfaces. A safety valve is provided on one terminal surface. The safety valve is a member that opens when the internal pressure of the exterior can increase and release the internal gas. Although the safety valve is generally provided on the positive electrode side, the present invention does not specify a position where the safety valve is provided on the positive electrode side, and may be provided at another position, for example, on the negative electrode side.

As such secondary battery cell 1, a cylindrical lithium ion secondary battery can be suitably used.

However, in the battery pack of the present invention, the secondary battery cell is not specified as a cylindrical battery, and is not specified as a lithium ion secondary battery. As the secondary battery cell, all chargeable batteries, for example, a nickel-metal hydride battery, a nickel-cadmium battery, and the like can also be used.

### (Side surface body 10)

As illustrated in Fig. 2 and Fig. 3, the pair of side surface bodies 10 sandwich secondary battery cells 1 between the side surface bodies 10 and the left and right side surfaces of intermediate body 20, respectively. Each intermediate body 20 has an inner surface formed in a curved surface shape according to the outer shapes of secondary battery cells 1. **In** the examples of Figs. 2 and 3, side surface body 10 is formed in a U-shape or an angular U-shape in the cross-sectional view, and an inner surface of the U-shape or the angular U-shape is formed in a curved surface shape to abut on a cylindrical side surface of secondary battery cell 1. Side surface body 10 is provided with protruding parts 12 protruding toward the surface facing intermediate body 20.

Protruding part 12 is formed on at least a part of a U-shaped end edge. Side surface body 10 is made of, for example, resin. Preferably, a polycarbonate resin or the like can be used.

### (Intermediate body 20)

As illustrated in Figs. 2 and 3, intermediate body 20 is arranged between adjacent secondary battery cells 1. Curved regions 22 each curved in a shape along the side surface of secondary battery cell 1 are formed at the centers of the side surfaces of intermediate body 20, that is, in the middle in the vertical direction in the drawing. Fixing structures 24 for fixing to side surface bodies 10 are provided on both sides of curved regions 22 and above and below curved regions 22 in the drawing. With such a configuration, as illustrated in Fig. 3, secondary battery cells 1 can be sandwiched by fixing intermediate bodies 20 and side surface bodies 10, and even cylindrical secondary battery cells 1 can be held so as not to rotate. That is, as indicated by thick arrows of Fig. 3, the rotation of secondary battery cells 1 indicated by thin arrows is prevented by sandwiching secondary battery cells 1 from the left and right direction.

### (Cell storage space 2)

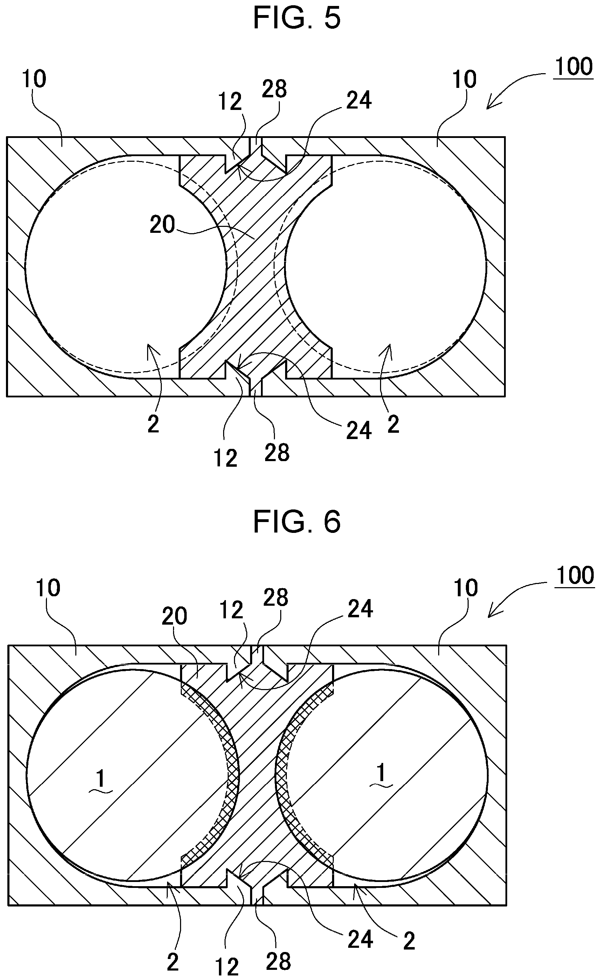

As described above, in battery pack 100 according to the present exemplary embodiment, cell storage spaces 2 for storing secondary battery cells 1 are formed between intermediate body 20 and side surface bodies 10 by connecting intermediate body 20 and side surface bodies 10. **In** other words, intermediate body 20 and side surface bodies 10 are combined to constitute a cell holder that holds secondary battery cells 1. Cell storage space 2 is a cylindrical storage space formed by curved region 22 of intermediate body 20 and the curved region of side surface body 10. The cylindrical storage space is preferably formed to be equal to or smaller than the outer shape of secondary battery cell 1. **In** particular, the curvature radius of the curved region is preferably small in the pressing direction in which intermediate body 20 is pressed. **In** Fig. 6 and the like, a region indicated by cross hatching is elastically deformed by being pressed, and a frictional force is generated as a reaction thereof.

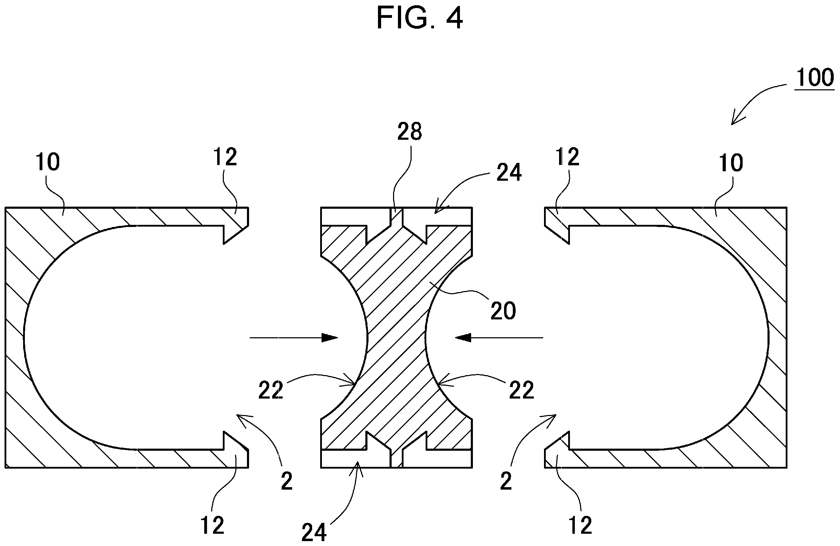

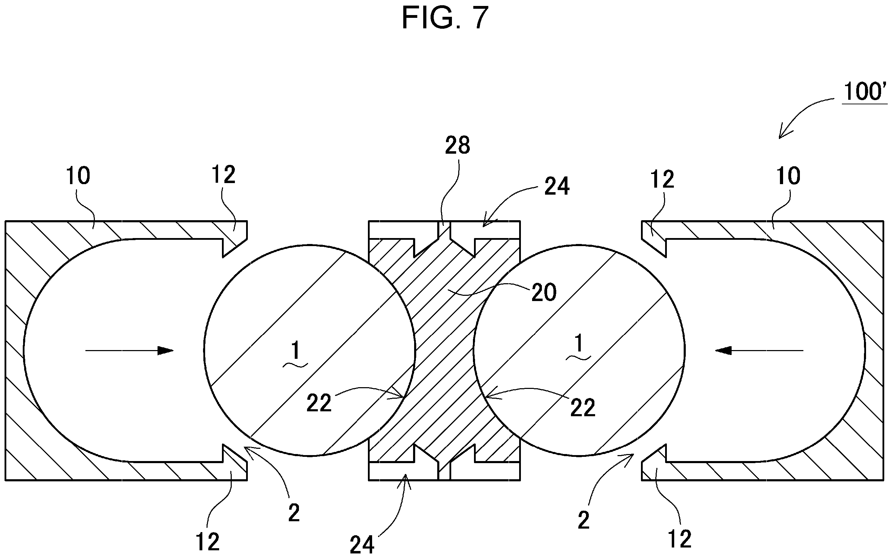

The clearance between the outer surface of secondary battery cell 1 and the inner surface of cell storage space 2 is preferably small. This is because the clearance causes secondary battery cell 1 to unintentionally rotate in cell storage space 2. On the other hand, since no clearance is provided, it is difficult to store secondary battery cell 1 in cell storage space 2. Therefore, in the assembly process of battery pack 100, secondary battery cells 1 are press-fitted into cell storage spaces 2 as illustrated in Fig. 6 in a state where cell storage spaces 2 are configured by connecting side surface bodies 10 to both sides of intermediate body 20 as illustrated in Figs. 4 and 5. Through such press fitting, frictional resistance is generated between the cylindrical side surface of secondary battery cell 1 and the inner surface of cell storage space 2, and rotation can be suppressed. Alternatively, as in battery pack 100' illustrated in Fig. 7, side surface bodies 10 may be connected in a state where secondary battery cells 1 are arranged on both sides of intermediate body 20 in advance. According to this method, secondary battery cells 1 can be stored in cell storage spaces 2 without performing the press-fitting operation of secondary battery cells 1.

### (End surface plate 30)

The pair of end surface plates 30 close the end surfaces of the assembly in which secondary battery cells 1 are sandwiched between intermediate body 20 and side surface bodies 10. Each end surface plate 30 is provided with an end surface plate fixing mechanism 32 for fixing to the end surface of the assembly. As end surface plate fixing mechanism 32, for example, a known fixing method such as screwing end surface plate 30 to side surface body 10 or intermediate body 20, providing a claw part around end surface plate 30, and fitting or press-fitting the end surface plate to side surface body 10 or intermediate body 20 can be appropriately used. End surface plate 30 is made of resin, for example. Preferably, a polycarbonate resin or the like can be used.

By providing end surface plate 30, it is possible to obtain an advantage that the pressing force to secondary battery cells 1 can be equalized. In particular, when the plurality of secondary battery cells 1 are pressed by intermediate body 20 and side surface bodies 10, a situation in which a bias occurs in the pressing force with respect to secondary battery cells 1 may occur. For example, in a case where one secondary battery cell has a large collapsing amount of the intermediate body and the other secondary battery cell has a small collapsing amount, the pressing force is not constant, a difference occurs in the holding force of the secondary battery cell, and the reliability is lowered. On the other hand, by positioning and fixing the end surfaces of secondary battery cells 1 by end surface plate 30, the relative positions of intermediate body 20 sandwiching secondary battery cells 1 and side surface bodies 10 are also defined, the pressing force becomes constant, and it can be expected that secondary battery cells 1 are uniformly held by avoiding the imbalance of the pressing force, and the reliability is enhanced. It is preferable that end surface plate 30 has a positioning structure capable of defining the position of secondary battery cell 1. For example, a recess into which an end of secondary battery cell 1 is inserted is formed at an interface where end surface plate 30 is in contact with secondary battery cell 1.

End surface plate 30 holds a lead plate that connects electrodes of secondary battery cells 1. The plurality of secondary battery cells 1 are connected in series or in parallel with the lead plate interposed therebetween. The lead plate is formed of a metal plate, and is welded to secondary battery cells 1. A lead positioning guide along the outer shape of the lead plate may be formed on end surface plate 30 so as to position the lead plate at a predetermined position.

The lead plate may be arranged not on the inner surface side but on the outer surface side of the end surface plate. In this case, after the secondary battery cell is inserted into a storage space of a housing, the lead plate is fixed to the terminal surface of the secondary battery cell exposed from the housing.

### [Comparative example]

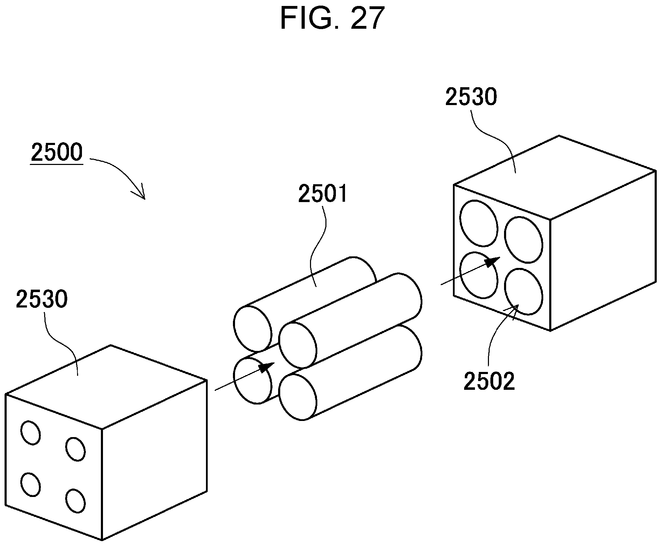

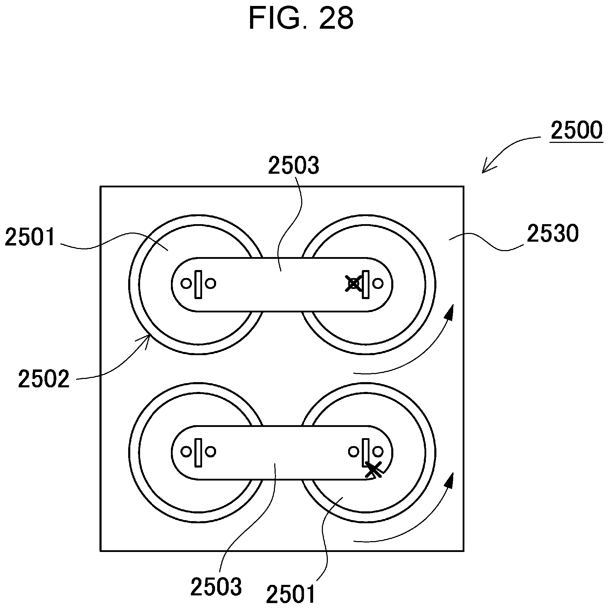

In general, many battery packs use a plurality of cylindrical secondary battery cells. In such a battery pack, as in battery pack 2500 according to a comparative example illustrated in an exploded perspective view of Fig. 27, a configuration in which a plurality of secondary battery cells 2501 are held by cell holder 2530 provided with cylindrical cell storage spaces 2502 is widely adopted. Cell holder 2530 illustrated in Fig. 27 is divided into two, and secondary battery cells 2501 are inserted into cell storage spaces 2502 from respective end edges in the length direction of secondary battery cells 2501 to cover the entire length of secondary battery cells 2501. At this time, a clearance may be provided between the outer surface of secondary battery cell 2501 and the inner surface of cell storage space 2502 as illustrated in the side view of Fig. 28 from the viewpoint of securing workability in the manufacturing process and the like. Further, lead plate 2503 for electrical connection is fixed to end surfaces of secondary battery cells 2501 in a state of being stored in cell holder 2530 by spot welding or the like.

However, since the cylindrical side surface of the secondary battery cell has a smooth shape without a part that can act as a resistance force with respect to the rotation direction, such as a protrusion or a step, it is not easy to suppress the rotation. In particular, in an application that may be exposed to vibration or impact, such as a battery pack used for an in-vehicle application or a mobile object such as an electric cart or an assist bicycle, or a battery pack used for a power source of an electric power tool, when a rotational motion is applied to the secondary battery cell, it is difficult to prevent the rotation inside the battery pack. As described above, when the clearance is provided between the outer surface of the secondary battery cell and the inner surface of the cell storage space, such rotation is likely to occur.

When the secondary battery cell rotates, as illustrated in Fig. 28, a spot welded part for fixing lead plate 2503 and the electrode on the end surface of secondary battery cell 2501 may be detached, or lead plate 2503 may be broken, which may cause a defect. In order to prevent this, it is conceivable to physically fix the secondary battery cell by applying an adhesive or the like between the secondary battery cell and the cell storage space. However, there is a problem that such adhesion work takes time and effort.

On the other hand, battery pack 100 according to the first exemplary embodiment adopts a configuration in which secondary battery cells 1 are sandwiched between intermediate body 20 and side surface bodies 10 instead of the integrated cell holder as described above. As described above, by dividing the cell holder into intermediate body 20 and side surface bodies 10 constituting the cell holder in the cross-sectional direction of secondary battery cell 1, the cylindrical side surface of secondary battery cell 1 can be sandwiched from both sides, and as illustrated in the cross-sectional view of Fig. 3, the pressing force can be easily applied to the surface thereof to increase the contact surface pressure, and the rotation can be effectively suppressed.

### (Fixing structure 24)

In intermediate body 20, as fixing structure 24 for fixing to side surface body 10, a locking part to be locked to protruding part 12 of side surface body 10 is formed. With such a configuration, with a simple configuration in which protruding parts 12 of side surface body 10 are locked to the locking parts of intermediate body 20, a sandwiching structure for sandwiching the cylindrical side surface of secondary battery cell 1 can be realized.

In the example of the perspective view of Fig. 2, in side surface body 10, claw parts having a claw shape at the tip edges of protruding parts 12 are formed. On the other hand, in intermediate body 20, locking grooves are formed as locking parts to be locked to the claw parts of side surface body 10 above and below curved region 22. With such a configuration, the claw parts can be press-fitted into and engaged with the locking grooves, and side surface body 10 and intermediate body 20 can be easily connected.

### [Second exemplary embodiment]

In the example of Figs. 2 and 3, the undercut part of the claw part protrudes in a direction in which the U-shaped opening of side surface body 10 is narrowed. With this configuration, when the claw part is locked to the locking part, a repulsive force acts to close the opening when the claw part is inserted into the locking part after the U-shaped opening of side surface body 10 is once expanded. Therefore, this repulsive force acts in a direction in which the cylindrical side surface of secondary battery cell 1 is also sandwiched from above and below, which contributes to increasing the stress for preventing the rotation of secondary battery cell 1.

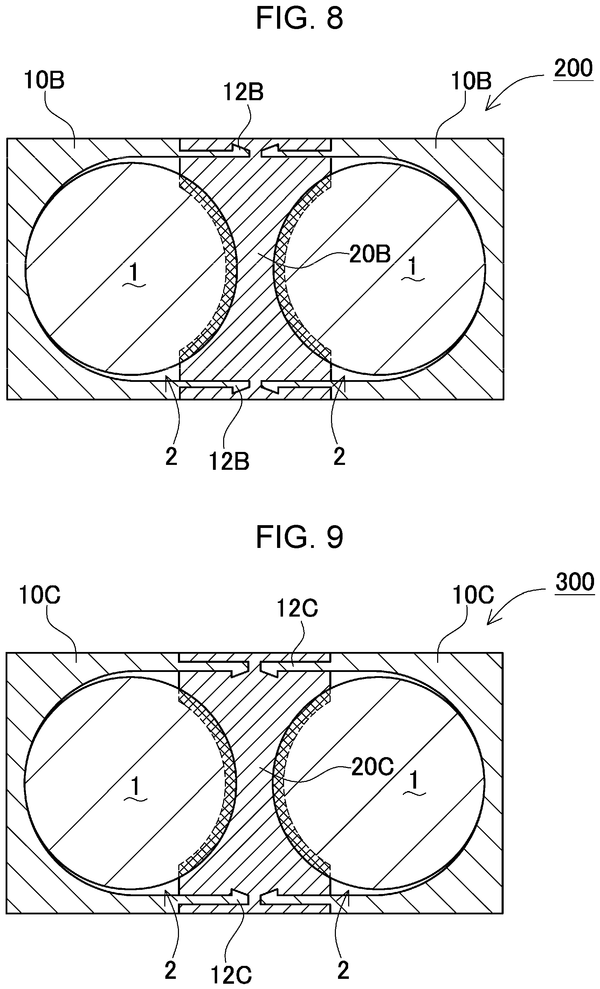

However, in the present invention, the configuration of the claw part is not limited thereto. For example, in battery pack 200 according to a second exemplary embodiment illustrated in Fig. 8, an undercut part of a claw part 12B protrudes toward the outside of the U-shaped opening. As a result, the structure of the molding die for molding the shape of the claw part can be simplified. Note that, in this drawing, members similar to those in first exemplary embodiment described above and the like are denoted by the same reference numerals, and detailed description thereof is appropriately omitted. The same applies to the following description of each exemplary embodiment.

In the example of Fig. 8, protruding part 12 of side surface body 10B is not flush with the upper surface of side surface body 10B, but is formed in a stepped shape recessed from the upper surface. Accordingly, fixing structure 24 of intermediate body 20B is formed in a groove shape into which protruding part 12 is press-fitted. Protruding part 12 press-fitted in such a groove shape can reduce the risk that protruding part 12 unintentionally falls off.

### [Third and fourth exemplary embodiments]

In protruding part 12 press-fitted into such a groove part, claw part 12C may be provided on the opposite side, that is, on the inner surface side of the U-shaped opening as in battery pack 300 according to a third exemplary embodiment illustrated in Fig. 9.

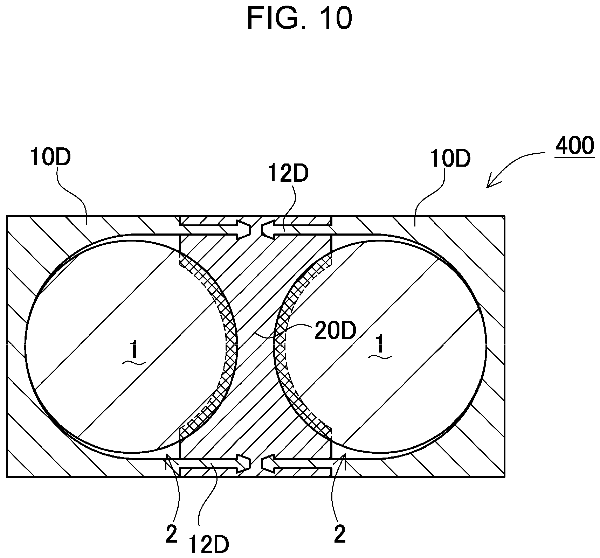

Alternatively, as in battery pack 400 according to fourth exemplary embodiment illustrated in Fig. 10, claw parts 12D may be provided on both sides of the protruding piece. Furthermore, the shape of the claw part is not limited to a claw shape, and a known shape that exhibits a locking or engaging effect, such as an L shape or a T shape, can be appropriately used. In accordance with the shape of claw part 12C, 12D, the fixing structure of intermediate body 20C, 20D is also formed in a groove shape for press-fitting claw part 12C, 12D.

### [Fifth exemplary embodiment]

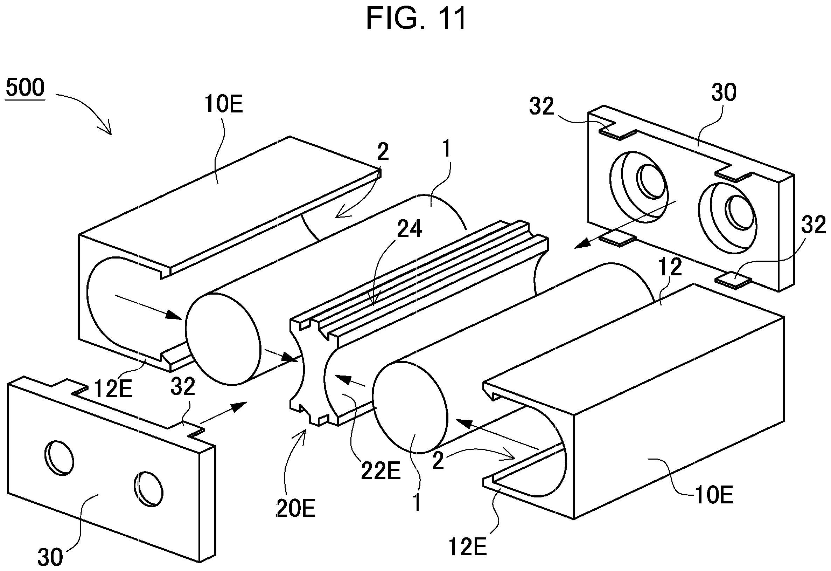

In the example of Fig. 2 and the like, the example in which protruding part 12 of side surface body 10 is provided at a part of the end edge of side surface body 10 has been described. Specifically, two protruding parts 12 are provided at positions separated from both ends in the longitudinal direction of side surface body 10. However, the position where the protruding part is provided is not limited to this configuration. For example, two protruding parts may be provided at both ends of the side surface body in the longitudinal direction. The number of protruding parts is not limited to two, and may be three or more. For example, a protruding part may be added to the middle of the side surface body in the longitudinal direction. Alternatively, one protruding part may be provided. In this case, it is desirable to form the protruding part to be wider to secure the fastening force. For example, as in battery pack 500 according to fifth exemplary embodiment illustrated in the exploded perspective view of Fig. 11, protruding part 12E may be extended along the longitudinal direction of side surface body 10E. By providing protruding part 12E on the entire end edge of side surface body 10E in this manner, a stronger fastening force with intermediate body 20E can be exerted.

Fixing structure 24 of intermediate body 20E is formed in accordance with protruding part 12E of side surface body 10E. That is, according to the position where the protruding part is provided, the number of the protruding parts, and the width of each protruding part, a structure that can be fixed to these protruding parts is formed.

After the intermediate body and the side surface body are fixed by the fixing structure, a known fixing structure such as an adhesive may be added for the purpose of further reinforcement.

### [Sixth exemplary embodiment]

As illustrated in Fig. 3, the pair of secondary battery cells 1 are separated from each other with intermediate body 20 interposed therebetween. Even in a case where either one of secondary battery cells 1 generates heat to a high temperature for some reason, it is required to avoid a situation in which heat propagates to other adjacent secondary battery cell 1 to catch fire. Therefore, it is preferable that intermediate body 20 is made of a material having high heat insulating property.

On the other hand, in the state illustrated in Fig. 3, secondary battery cells 1 are closest to each other at the central part of curved region 22 of intermediate body 20. In other words, in a part where the thickness of intermediate body 20 separating secondary battery cells 1 is the thinnest, a region where heat conduction is relatively likely to occur is formed.

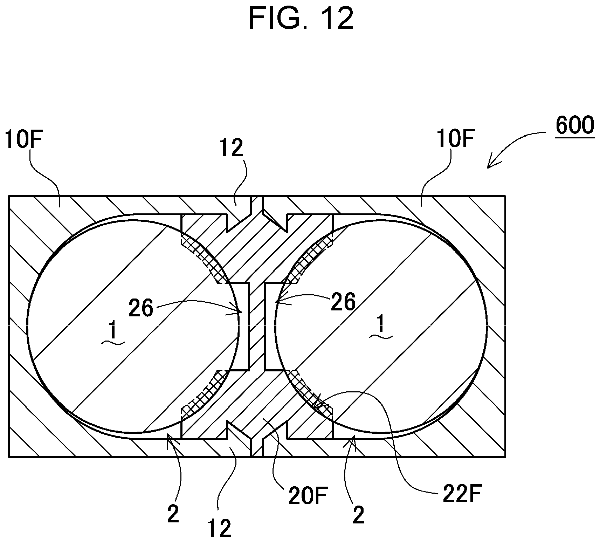

Therefore, even in such a configuration, a heat insulating space may be formed to exhibit heat insulating property. Such an example is illustrated in the cross-sectional view of Fig. 12 as battery pack 600 according to a sixth exemplary embodiment.

In battery pack 600 illustrated in this drawing, a recess is formed as heat insulating space 26 at the center of curved region 22F, that is, in a region where curved regions 22F formed on both sides of intermediate body 20F approach. By providing the recess, even if one secondary battery cell generates heat, the air layer in the recess exerts a heat insulating action, so that heat propagation to the other secondary battery cell can be suppressed.

In addition, in order to suppress heat propagation between the adjacent secondary battery cells, it is preferable that side surface bodies 10F are also in a non-contact state. Specifically, as illustrated in the cross-sectional view of Fig. 3, separation regions 28 in which side surface bodies 10 are separated from each other are formed in a state where the pair of side surface bodies 10 are fixed to both sides of intermediate body 20 with fixing structures 24 interposed therebetween. By providing such separation regions 28, even if one secondary battery cell generates heat, heat propagation to the other secondary battery cell through side surface body 10 can be suppressed.

In intermediate body 20, at least curved region 22 is preferably formed of a member having elasticity. With such a configuration, curved region 22 of intermediate body 20 can be elastically deformed to firmly hold secondary battery cell 1. For example, the intermediate body may be made of a hard resin, and a sheet having elasticity such as rubber may be attached to a part of the curved region, or an elastic layer may be coated, or the entire intermediate body may be formed of an elastic member. In addition, the curved region of the intermediate body may be made of a composite material having partially enhanced elasticity.

### [Seventh exemplary embodiment]

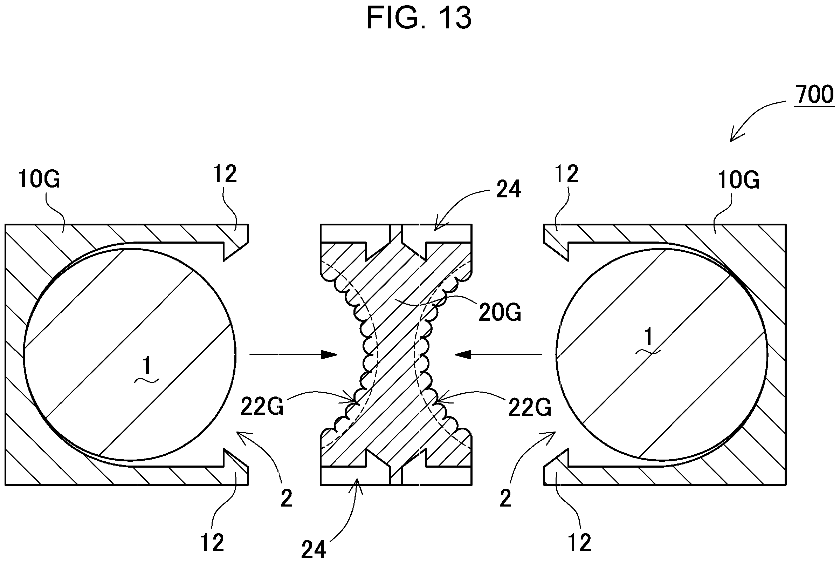

In intermediate body 20, curved region 22 may have a smooth surface, or irregularities may be provided on the surface. Such an example is illustrated in Fig. 13 as battery pack 700 according to a seventh exemplary embodiment. Intermediate body 20G illustrated in this drawing has irregularities formed on the surface of curved region 22G. By providing such irregularities, a contact surface pressure between the cylindrical side surface of secondary battery cell 1 and the inner surface of cell storage space 2 can be secured when secondary battery cell 1 is press-fitted into cell storage space 2 with side surface body 10G at the time of assembling pack battery 700. The irregularities are preferably formed to protrude from curved region 22G of intermediate body 20G more than the size corresponding to the size of the cylindrical side surface of secondary battery cell 1.

In the example of Fig. 13, in intermediate body 20G, the size corresponding to the cylindrical side surface of secondary battery cell 1 is indicated by a broken line, and irregularities are formed so as to protrude from curved region 22G from the broken line, whereby the irregularities of curved region 22G are elastically deformed to be in close contact with the cylindrical side surface of secondary battery cell 1 when secondary battery cell 1 is stored in storage space 2.

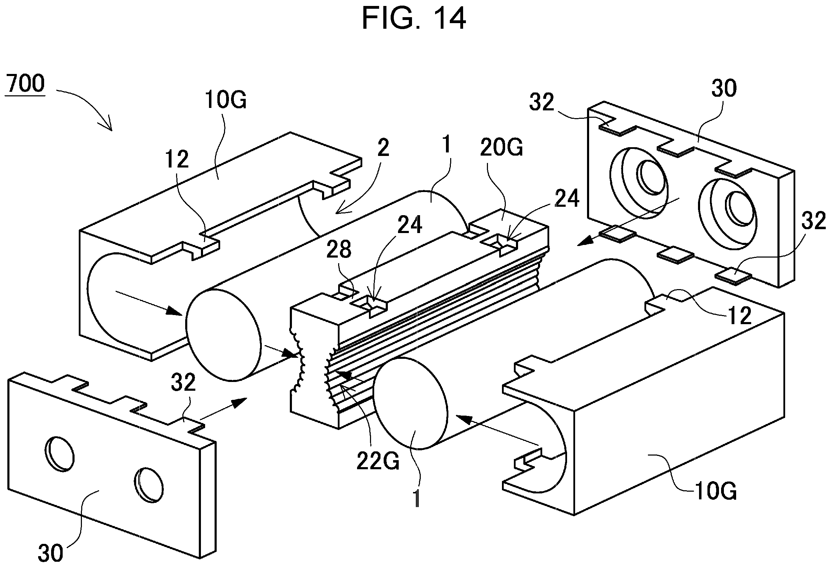

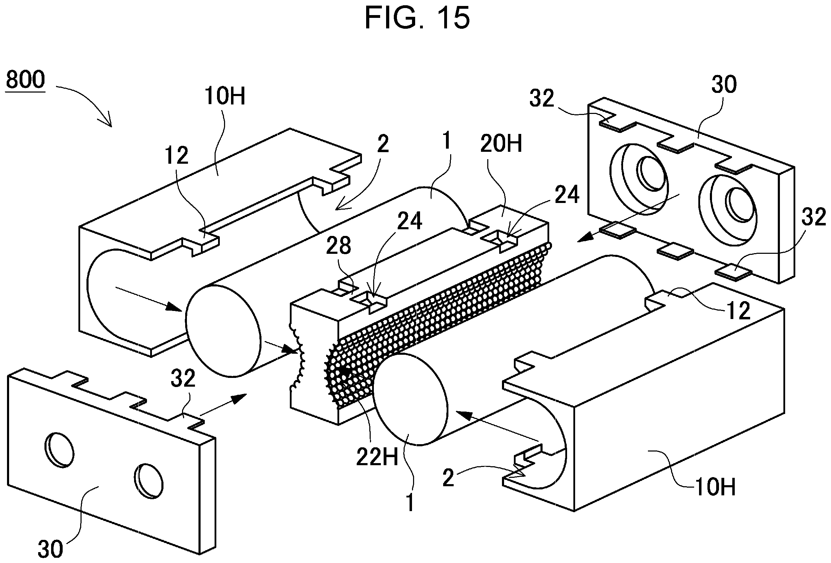

The irregularities are preferably provided on the entire surface of curved region 22G at a constant pitch. The irregularities may be curved in a dome shape in the cross-sectional view as illustrated in Fig. 13, or may be formed in a V shape or a rectangular shape. Further, as illustrated in the perspective view of Fig. 14, the irregularities can be formed in a line shape extended along the longitudinal direction of intermediate body 22G. Alternatively, as in intermediate body 20H of a battery pack according to a modification illustrated in the perspective view of Fig. 15, the irregularities provided in curved region 22H may be arranged in a dot shape, a dimple shape, or a knurled groove shape. In this way, the anti-slip effect can be easily exhibited.

### [Eighth exemplary embodiment]

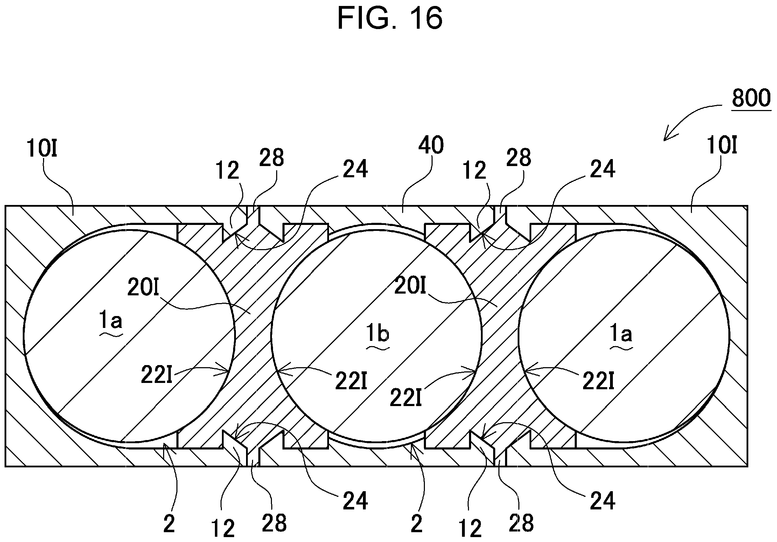

In the above example, the configuration has been described in which the pair of secondary battery cells are arranged in a horizontal posture and sandwiched between the curved regions of the left and right side surfaces of the intermediate body and the curved surfaces of the pair of side surface bodies. However, in the present invention, the number of secondary battery cells is not limited to two, and may be three or more. As an example, an example in which three secondary battery cells are arranged in a horizontal posture is illustrated in the cross-sectional view of Fig. 16 as battery pack 800 according to an eighth exemplary embodiment. Also in this drawing, the same members as those in the first exemplary embodiment and the like described above are denoted by the same reference numerals, and detailed description thereof is appropriately omitted.

Battery pack 800 illustrated in Fig. 16 includes a pair of side surface bodies 10I, three secondary battery cells 1a, 1b, and 1a, two intermediate bodies 20I, and intermediate cover 40. Intermediate bodies 20I having the same shape in which curved regions 22I are provided on the left and right side surfaces can be used.

Three secondary battery cells 1a, 1b, and 1a are alternately arranged with intermediate bodies 20I. On secondary battery cells 1a located on both sides, side surface bodies 10I are arranged. These three secondary battery cells 1a, 1b, and 1a are arranged in the same plane. In addition, among three secondary battery cells 1a, 1b, and 1a, secondary battery cell 1a located at the end is sandwiched between the inner surface of side surface body 10I and the side surface of intermediate body 20I similarly to the example body 1 and the like. On the other hand, secondary battery cell 1b located in the middle is sandwiched between the side surfaces of intermediate bodies 20I. With such a configuration, three or more secondary battery cells 1a, 1b, 1a can be alternately sandwiched between the plurality of intermediate bodies 20I and side surface bodies 10I.

Further, secondary battery cell 1b positioned in the middle is sandwiched between the upper and lower sides by intermediate cover 40.

Intermediate cover 40 is made of a hard member having insulating property, for example, the same material as side surface body 10I. Each of the end edges of intermediate cover 40 is fixed by end surface plate 30. With such a configuration, the entire periphery of secondary battery cell 1b located in the middle can also be sandwiched between intermediate bodies 20I and intermediate cover 40, and can be stably held so as not to rotate even if secondary battery cell 1b has a cylindrical shape. Of course, Fig. 16 is an example, and it goes without saying that four or more secondary battery cells may be arranged side by side. In this case, similarly, intermediate bodies can be arranged between adjacent secondary battery cells, and each secondary battery cell can be sandwiched between the intermediate bodies.

### [Ninth exemplary embodiment]

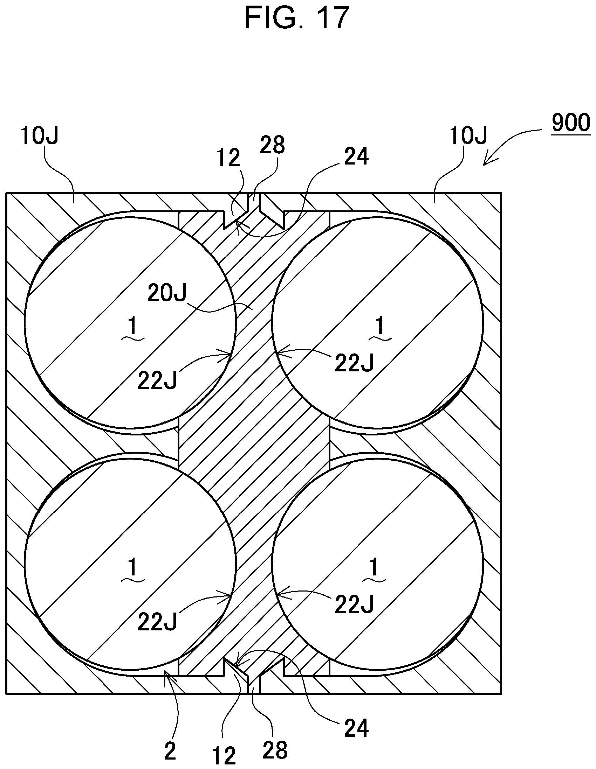

In the above example, the configuration has been described in which all the plurality of secondary battery cells are arranged in a horizontal posture in the same plane and sandwiched between the intermediate body and the side surface bodies. However, in the present invention, the arrangement of the secondary battery cells is not limited to such a configuration, and for example, the secondary battery cells may be laminated in multiple stages. As an example, an example in which two secondary battery cells 1 arranged in a horizontal posture are laminated in two stages is illustrated in the cross-sectional view of Fig. 17 as battery pack 900 according to a ninth exemplary embodiment. Also in this drawing, the same members as those in the first exemplary embodiment and the like described above are denoted by the same reference numerals, and detailed description thereof is appropriately omitted.

Battery pack 900 illustrated in Fig. 17 includes a pair of side surface bodies 10J, four secondary battery cells 1, and one intermediate body 20J. In intermediate body 20J, two curved regions 22J are formed side by side in the vertical direction on each of the left and right side surfaces. Two curved surfaces along the cylindrical side surfaces of secondary battery cells 1 are vertically arranged on each of the inner surfaces of the pair of side surface bodies 10J. With such a configuration, four secondary battery cells 1 arranged in multiple stages can be sandwiched between the inner surfaces of the pair of side surface bodies 10J and the left and right side surfaces of intermediate body 20J. It goes without saying that the number of stages of the secondary battery cells is not limited to two, and may be three or more. The number of secondary battery cells in each stage is not limited to two, and may be three or more as in the eighth embodiment described above.

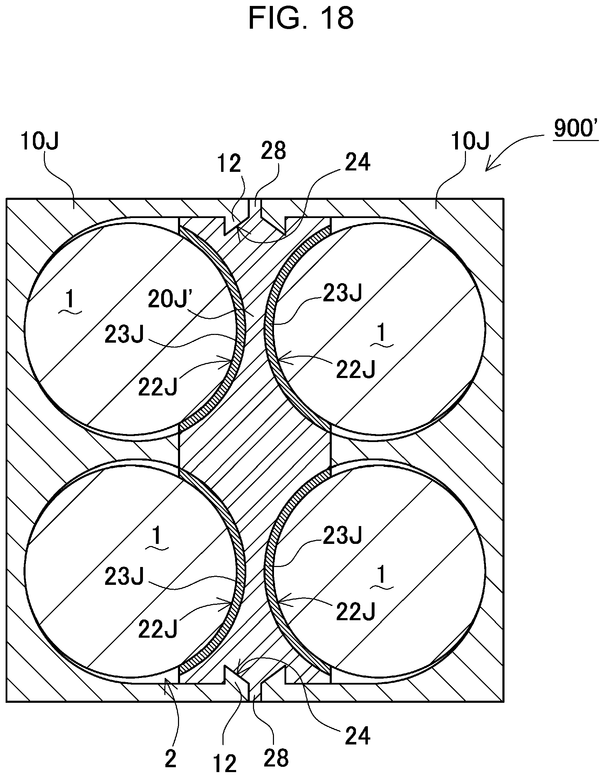

Furthermore, the intermediate body is not limited to an example in which the entire intermediate body is formed of a member having elasticity as described above, and for example, the intermediate body may be made of a hard resin, and a sheet having elasticity such as rubber may be attached to a part of the curved region, or an elastic layer may be coated. Such an example is illustrated in the cross-sectional view of Fig. 18 as battery pack 900' according to a modification. Intermediate body 20J' illustrated in this drawing is made of resin similarly to side surface body 10J, and elastic sheets 23J are attached to curved regions 22J. Even with such a configuration, a frictional force is generated by pressing the cylindrical side surface of secondary battery cell 1, and the rotation of secondary battery cell 1 can be prevented.

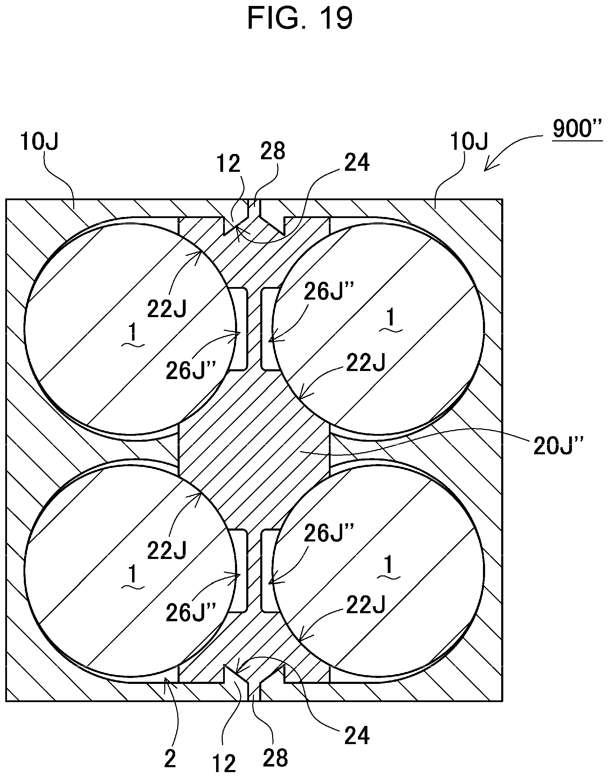

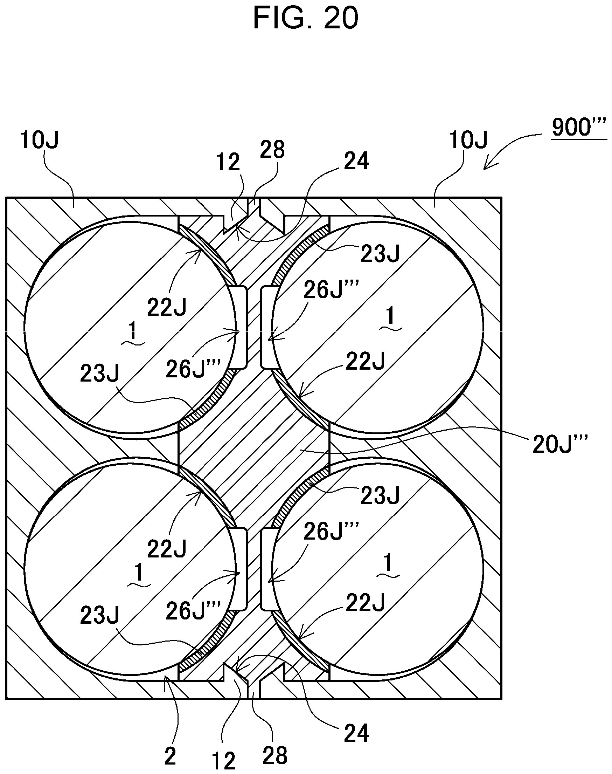

Furthermore, similarly to the sixth exemplary embodiment described above, a heat insulating space may be provided in the curved region. Such an example is illustrated in the cross-sectional views of Figs. 19 and 20 as battery packs 900" and 900‴ according to modifications. Also in these modifications, the same members as those of the exemplary embodiments described above are denoted by the same reference numerals, and detailed description thereof is appropriately omitted. For example, side surface bodies 10J the same as those of Fig. 17 are used. Intermediate bodies 20J" and 20J‴ illustrated in the respective drawings each form a recess as heat insulating spaces 26J", 26J‴ at the closest points of the curved regions formed on the left and right sides. With such a configuration, air layers are provided at a part where adjacent secondary battery cells 1 are closest to each other to inhibit heat conduction in the heat transfer path, so that even if any of the secondary battery cells has a high temperature, it is possible to avoid a situation in which heat propagates to the adjacent secondary battery cell.

### [Modifications]

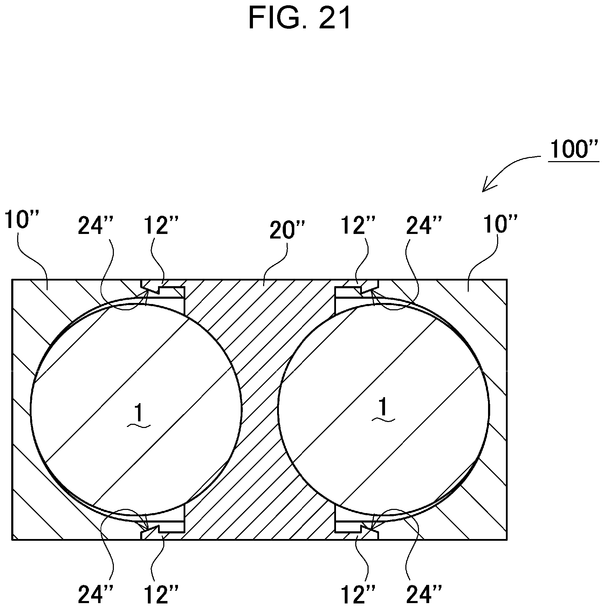

In each of the above exemplary embodiments, as the fixing structure for fixing the intermediate body and the side surface body, an example has been described in which the locking part for engaging with a part of the side surface body is formed on the intermediate body side, and the protruding part protruding to be locked to the locking part is formed on the side surface body side on the side surface facing the intermediate body and at a position corresponding to the locking part. However, in the present invention, the fixing structure for fixing the intermediate body and the side surface body is not limited to this configuration. For example, contrary to the above configuration, the protruding part may be formed on the intermediate body side, and the locking part may be formed on the side surface body side. Fig. 21 illustrates such an example as a battery pack according to a modification. Also in this drawing, the same members as those in first exemplary embodiment described above and the like are denoted by the same reference numerals, and detailed description thereof is omitted. Battery pack 100" illustrated in Fig. 21 includes a plurality of secondary battery cells 1, a pair of side surface bodies 10", and intermediate body 20". In intermediate body 20", protruding parts 12" protruding to engage with a part of side surface body 10" are formed. Further, in side surface body 10", locking parts 24" to be locked to protruding parts 12" are formed at positions corresponding to protruding parts 12" on a surface side facing intermediate body 20". Also with such a configuration, side surface body 10" and intermediate body 20" can be similarly fixed.

### [Tenth exemplary embodiment]

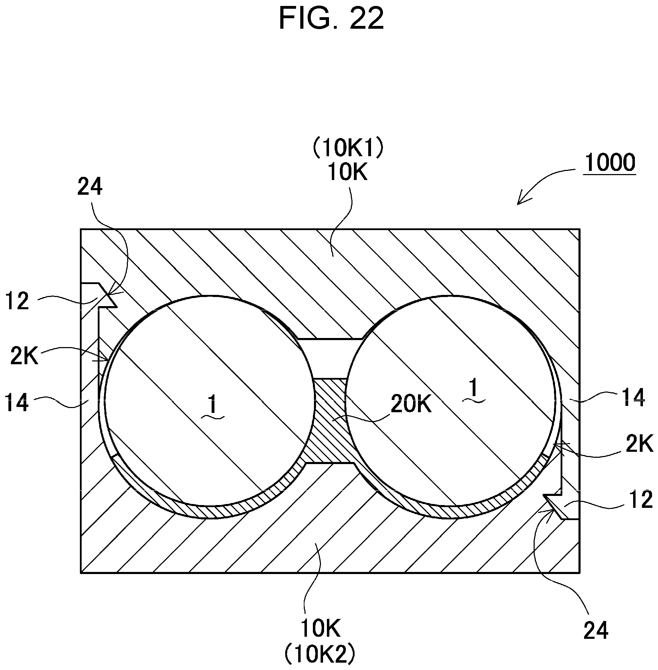

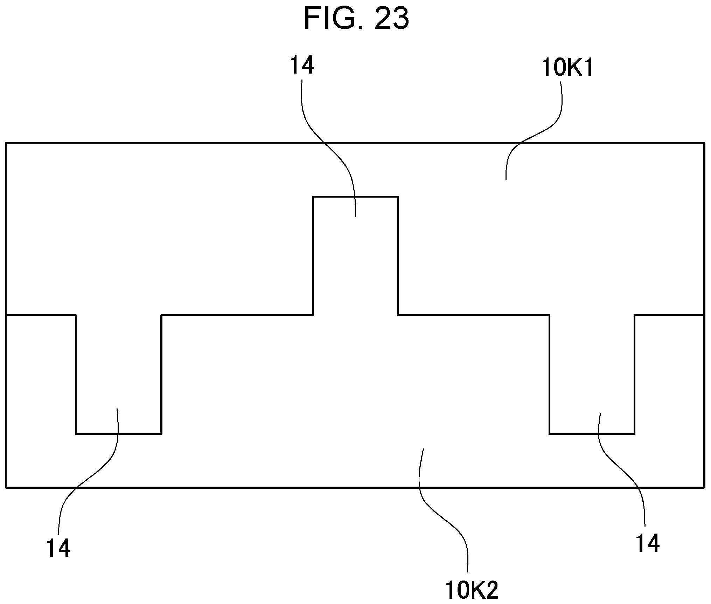

In the above example, an example has been described in which only the secondary battery cells located at both ends are sandwiched between the pair of side surface bodies in a state where the plurality of secondary battery cells are arranged. However, the present invention is not limited to this configuration, and all the secondary battery cells may be sandwiched from above and below in a state where the plurality of secondary battery cells are arranged. The intermediate body may be interposed between any one of the side surface bodies and the secondary battery cell. Such an example is illustrated as battery pack 1000 according to a tenth exemplary embodiment in the cross-sectional view of Fig. 22 and the side view of Fig. 23. Also in these drawings, the same members as those of the first exemplary embodiment and the like described above are denoted by the same reference numerals, and detailed description thereof is appropriately omitted.

Battery pack 1000 illustrated in Fig. 22 includes a pair of side surface bodies 10K, two secondary battery cells 1, and one intermediate body 20K. The pair of side surface bodies 10K form cell storage space 2K that sandwiches two secondary battery cells 1 between facing surfaces of side surface bodies 10K facing each other. Two curved surfaces according to the outer shapes of secondary battery cells 1 are formed side by side on each facing surface.

With such a configuration, two secondary battery cells 1 can be sandwiched from above and below by the pair of side surface bodies 10K. In other words, as in the exemplary embodiment described above, the outer shape of battery pack 1000 is not formed by sandwiching the intermediate body, but the outer shape of battery pack 1000 is formed only by the pair of side surface bodies 10K. For this reason, side surface body 10K is provided with an engaging structure for engaging the side surface bodies. For example, as illustrated in the side view of Fig. 23, the engaging structure can be configured by one or more engaging pieces 14 protruding from the side surface of side surface body 10K. In the example of Fig. 23, two engaging pieces 14 are provided on the left and right from upper side surface body 10K1 toward lower side surface body 10K2 in the figure. On the other hand, one engaging piece 14 is provided at the center from lower side surface body 10K2 toward upper side surface body 10K1. In addition, an engaging claw may be formed at the tip of engaging piece 14 as necessary, and a locking recess for locking the engaging claw may be formed at a corresponding position of one side surface body 10K. Further, by forming two engaging pieces 14 on one side surface and one engaging piece 14 on the other side surface of each side surface body 10K, side surface bodies 10K having the same shape are inverted and used, so that these side surface bodies 10K can be engaged. Further, cell storage space 2K for storing all secondary battery cells 1 is formed between the facing surfaces of the pair of side surface bodies 10K.

On the other hand, intermediate body 20K is arranged to overlap with a plurality of curved surfaces formed on one facing surface of the pair of side surface bodies 10K. The curved regions of intermediate body 20K are arranged side by side. In other words, intermediate body 20K is formed in a shape in which the two curved regions are combined, instead of forming the curved regions back to back on the left and right side surfaces as in Fig. 3 and the like. Each curved region is formed so as to correspond to the curved surface of side surface body 10K. Intermediate body 20K presses the plurality of secondary battery cells 1 in cell storage space 2K. With such a configuration, rotation of cylindrical secondary battery cells 1 can be prevented by sandwiching intermediate body 20K while sandwiching two secondary battery cells 1 by the pair of side surface bodies 10K from above and below in a posture in which two secondary battery cells 1 are arranged in parallel.

### [Eleventh exemplary embodiment]

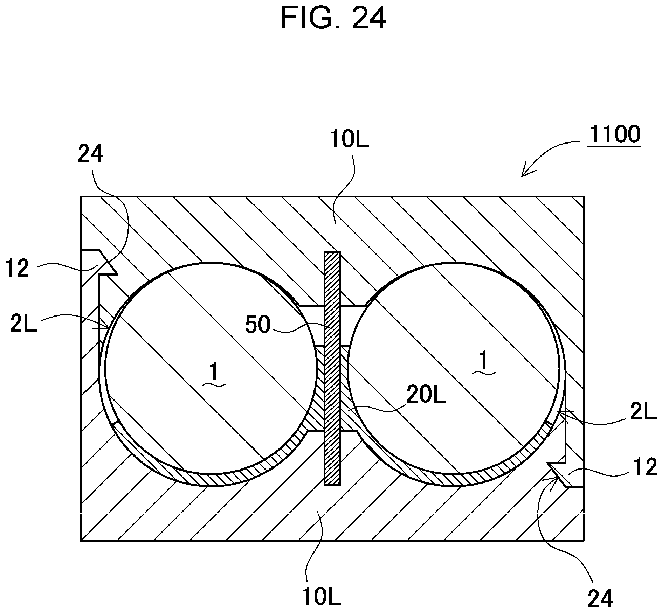

In addition, a member having a heat insulating property can be interposed between adjacent secondary battery cells to further improve the heat insulating property. Such an example is illustrated in the cross-sectional view of Fig. 24 as battery pack 1100 according to an eleventh exemplary embodiment. Also in this drawing, the same members as those in the first exemplary embodiment and the like described above are denoted by the same reference numerals, and detailed description thereof is appropriately omitted.

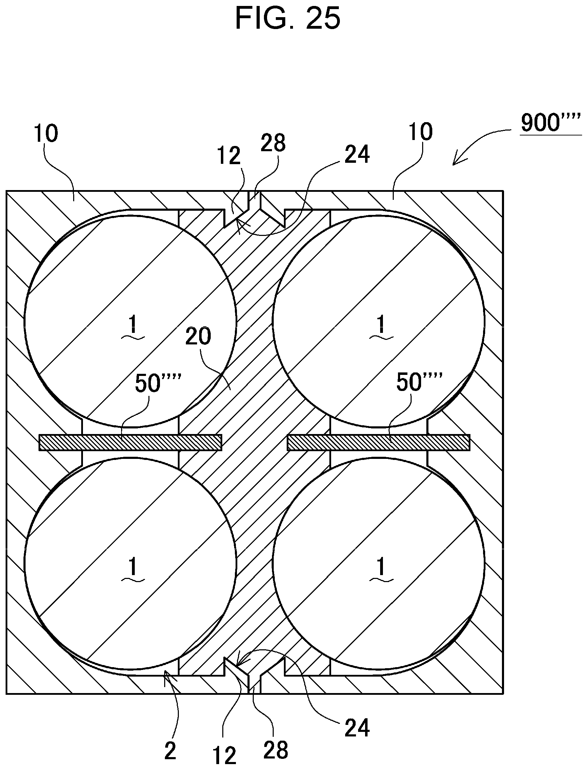

In battery pack 1100 illustrated in Fig. 24, heat insulating plate 50 is interposed between adjacent secondary battery cells 1 in battery pack 1000 of the type of Fig. 22 described above. As heat insulating plate 50, a material having excellent heat insulating property, for example, a foamed molding resin material such as foamed polystyrene or foamed urethane foam, or an inorganic fiber-based heat insulating material obtained by dissolving an inorganic material such as glass wool at a high temperature to form thin fibers and accumulating the thin fibers in a cotton form can be used. Side surface body 10L and intermediate body 20L are provided with a holding structure such as a groove or a slit so that heat insulating plate 50 can be held in cell storage space 2L. With such a configuration, heat insulating plate 50 can effectively insulate between adjacent secondary battery cells 1. It goes without saying that heat insulating plate 50 can be applied not only to battery pack 1000 of Fig. 22 but also to each of the exemplary embodiments described above. For example, battery pack 900"" according to a modification in which heat insulating plate 50"" is added to battery pack 900 illustrated in Fig. 17 is illustrated in the cross-sectional view of Fig. 25.

### [Twelfth exemplary embodiment]

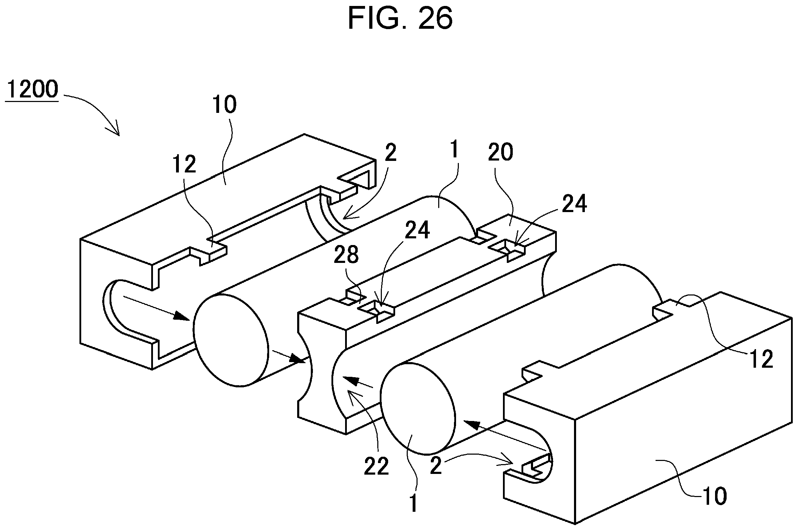

In each of the above exemplary embodiments, the configuration in which each end face of the battery pack is closed by the pair of end surface plates is adopted, but the present invention is not limited to this configuration, and for example, the end face may not be closed by the end surface plates. Such an example is illustrated in Fig. 26 as a battery pack according to a twelfth exemplary embodiment.

Also in this drawing, the same members as those in first exemplary embodiment described above and the like are denoted by the same reference numerals, and detailed description thereof is omitted. Battery pack 1200 illustrated in Fig. 26 includes a plurality of secondary battery cells 1, a pair of side surface bodies 10, intermediate body 20, and a pair of end surface plates 30, and has end surfaces exposed. With such a configuration, the number of components can be reduced and the structure can be simplified.

In the above example, the plurality of cylindrical secondary battery cells are arranged in a posture in which the cylindrical side surfaces face each other to form the cell laminate, but the plurality of secondary battery cells may be arranged in the longitudinal direction and held in the posture. When the plurality of secondary battery cells are laminated in the longitudinal direction, the lateral direction, or the height direction, a reinforcing structure for reinforcing the connection between the intermediate body and the side surface body may be added. For example, the reinforcement may be performed by passing bolts through the side surface bodies or the intermediate body.

### INDUSTRIAL APPLICABILITY

The battery pack according to the present invention can be suitably used as a power supply device for a moving body such as an assist bicycle or an electric cart. In addition, the battery pack according to the present invention can be appropriately used for applications such as a power source of a portable electric device such as an electric cleaner or an electric tool.

### REFERENCE MARKS IN THE DRAWINGS

100, 100', 100", 200, 300, 400, 500, 600, 700, 800, 900, 900', 900", 900‴, 900"", 1000, 1100: battery pack
1, 1a, 1b: secondary battery cell
2, 2K, 2L: cell storage space
10, 10", 10B, 10C, 10D, 10E, 10F, 10G, 10H, 10I, 10J, 10K, 10K1, 10K2, 10L: side surface body
12, 12": protruding part
12C, 12D, 12E: claw part
14: engaging piece
20, 20", 20B, 20C, 20D, 20E, 20F, 20G, 20H, 20I, 20J, 20J', 20J", 20J"', 20K, 20L: intermediate body
22, 22F, 22G, 22H, 22J: curved region
23J: elastic sheet
24: fixing structure
24": locking part
26, 26J", 26J‴: heat insulating space
28: separation region
30: end surface plate
40: intermediate cover
50, 50"": heat insulating plate
32: end surface plate fixing mechanism
2500: battery pack
2501: secondary battery cell
2502: cell storage space
2503: lead plate
2530: cell holder

## Claims

1. A battery pack comprising:
a plurality of secondary battery cells each including a cylindrical shape, the plurality of secondary battery cells being arranged adjacent to each other to be parallel to each other;
an intermediate body arranged between adjacent secondary battery cells among the plurality of secondary battery cells; and
a pair of side surface bodies each of which includes an inner surface being in a curved shape according to an outer shape of the secondary battery cell and interposes a corresponding one of the plurality of secondary battery cells between a part of the inner surface and a part of a surface of the intermediate body, wherein
the part of the surface of the intermediate body includes a curved region that is curved in a shape along a side surface of the corresponding one of the plurality of secondary battery cells.

2. The battery pack according to Claim 1,
wherein each of the pair of side surface bodies define a cell storage space that interposes the corresponding one of the plurality of secondary battery cells between the inner surface and a side surface of the intermediate body,
wherein the curved region is positioned in a middle of the side surface of the intermediate body, and
wherein a fixing structure for fixing to the side surface body is provided on each of both sides of the curved region.

3. The battery pack according to Claim 2, wherein
the fixing structure includes
a locking part included in the intermediate body, the locking part being for engaging with a part of the side surface body, and
a protruding part included in the side surface body at a position corresponding to the locking part closer to a surface facing the intermediate body, the protruding part protruding to be locked to the locking part.

4. The battery pack according to Claim 2, wherein
the fixing structure includes
a protruding part included in the intermediate body, the protruding part protruding to engage with a part of the side surface body, and
a locking part included in the side surface body at a position corresponding to the protruding part closer to a surface facing the intermediate body, the locking part being to be locked to the protruding part.

5. The battery pack according to any one of Claims 1 to 4,
wherein a plurality of the intermediate bodies are provided,
wherein each of the plurality of secondary battery cells is alternately arranged with one of the plurality of intermediate bodies,
wherein secondary battery cells located at the ends among the plurality of secondary battery cells are each interposed between an inner surface of a corresponding one of the pair of side surface bodies and one side surface of the plurality of intermediate bodies, and
wherein a secondary battery cell located in a middle among the plurality of secondary battery cells is interposed between side surfaces of the plurality of intermediate bodies.

6. The battery pack according to any one of Claims 1 to 5, wherein
the plurality of secondary battery cells are laminated and arranged in multiple stages between inner surfaces of the pair of side surface bodies and left and right side surfaces of the intermediate body.

7. The battery pack according to any one of Claims 1 to 6, wherein
the side surface bodies are not in contact with each other.

8. The battery pack according to Claim 1,
wherein the pair of side surface bodies form a cell storage space that interposes the plurality of secondary battery cells between facing surfaces of the side surface bodies face each other,
wherein each of the facing surfaces includes a plurality of curved surfaces according to an outer shape of the secondary battery cells, and
wherein the intermediate body is arranged to overlap with the plurality of curved surfaces on one of the facing surfaces of the pair of side surface bodies, and presses the plurality of secondary battery cells in the cell storage space.

9. The battery pack according to Claim 8, further comprising
a heat insulating plate interposed between adjacent secondary battery cells among the plurality of secondary battery cells.

10. The battery pack according to any one of Claims 1 to 9, wherein
the intermediate body includes at least the curved region made of a member including elasticity.

11. The battery pack according to any one of Claims 1 to 10, wherein
a size of a cylindrical storage space surrounded by the curved region of the intermediate body and a curved region of the side surface body is equal to or smaller than a size of an outer shape of the secondary battery cell.

12. The battery pack according to any one of Claims 1 to 11, wherein
the intermediate body includes recesses in regions of the curved regions , the regions being closer to each other on both sides of the intermediate body.

13. The battery pack according to any one of Claims 1 to 12, wherein
the intermediate body includes irregularities on a surface of the curved region.
